# EUROPEAN PATENT APPLICATION

(11) **EP 1 139 071 A1**
(43) Date of publication of application: **04.10.2001**
(21) Application number: 00309482.8
(22) Date of filing: 27.10.2000
(51) Int. Cl.: G01D 5/26, H04R 23/00, G01H 9/00

(54) **Thin optical microphone sensor with reflecting wedges**

(30) Priority: 27.03.2000 IL 13528200
(71) Applicant: Phone-Or Ltd, Or-Yehudah 60252 (IL)
(72) Inventor: Paritsky, Alexander, Modiin 71700 (IL); Kots, Alexander, Ashdod 77700 (IL)
(74) Representative: Pratt, David Martin

(57) **Abstract**

The invention provides a thin optical microphone/sensor for measuring distances to, and/or physical properties of, a reflective surface (22), including a light source (4) coupled to a first light waveguide (6), and a second light waveguide (14) contiguous with the first light waveguide, coupled to a photodetector (20), wherein the first and the second light waveguides are wedge-shaped bodies (24,26) disposed with their thin edges facing each other to form a contiguous surface along one side of the waveguides and to include an angle of at least 110° at their opposite sides, causing a substantially total internal reflection of the light reaching the opposite sides from within the bodies.

## Description

### Field of the Invention

The present invention relates to optical and fiber optic microphones and sensors. More particularly, the present invention relates to thin optical microphone/sensors for measuring distances to, and/or physical properties of, a medium, in accordance with the teachings of U.S. Patent No. 5,771,091.

### Background of the Invention

Fiber optic sensors possess high distance resolution that enables the building of optical microphones and sensing the movements of acoustical membranes in the range of several nanometers. Despite the relatively small size of such microphone/sensors, sometimes the disadvantage of these devices is their relatively large diameter. There are cases when microphones have to be as planar and as thin as possible. For example, in the case of a microphone that has to be mounted in a cellular telephone flipper, it has to be of the same thickness as the flipper, or even thinner.

### Disclosure of the Invention

It is therefore a broad object of the present invention to provide a thin, planar optical microphone/sensor.

It is another object of the present invention to provide a very sensitive, thin, planar optical microphone/sensor.

It is a further object of the present invention to provide a low-cost, thin, planar optical microphone/sensor.

According to the present invention, there is therefore provided a thin optical microphone/sensor for measuring distances to, and/or physical properties of, a reflective surface, comprising a light source coupled to a first light waveguide, and a second light waveguide contiguous with said first light waveguide, coupled to a photodetector; wherein said first and said second light waveguides are wedge-shaped bodies disposed with their thin edges facing each other to form a contiguous surface along one side of said waveguides and to include an angle of at least 110° at their opposite sides, causing a substantially total internal reflection of the light reaching said opposite sides from within the bodies.

### Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

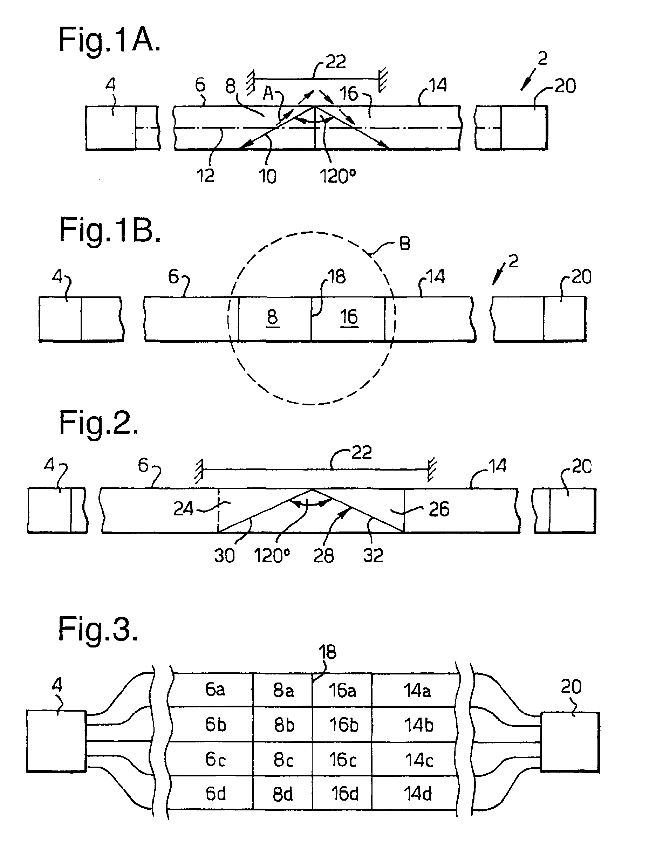

Fig. 1*a* is a side view of a thin optical microphone/sensor according to the present invention with one pair of light waveguides;
Fig. 1*b* is a plane view of the thin optical microphone/sensor of Fig. 1*a*;
Fig. 2 is a side view of another embodiment of a thin optical microphone/sensor;
Fig. 3 is a plane view of an embodiment of a thin optical microphone/sensor having several pairs of light waveguides;
Fig. 4 illustrates a thin optical microphone/sensor having several pairs of light waveguides arranged in a planar circle, and
Fig. 5 is a cross-sectional view of a thin optical microphone/sensor, showing an LED die, a photo diode die and optical wedges.

### Detailed Description

There is shown in Figs. 1*a* and 1*b* a thin optical microphone/sensor 2 according to the present invention, consisting of a light source 4, e.g., an LED, which is optically coupled to one end of a light waveguide 6 having a tapered or wedge-shaped end portion 8 at its other end. The tapering face 10 of portion 8 is cut at an angle, so as to provide a total internal reflection of a light beam passing through waveguide 6. In consideration of the material from which light waveguides 6 are produced, e.g., glass or plastic, the angle should be at least 110° and more particularly, about 120°. Similarly, there is provided a second waveguide 14 having a tapered or wedge-shaped end portion 16 cut at the same angle of about 120° to the axis 12. The edges of the wedged portions 8 and 16 of waveguides 6 and 14 are connected, forming a line of contact 18. Waveguide 14 is coupled to a photo detector 20, e.g., a photo diode. A membrane 22 extends in spaced-apart relationship across the tapered end portions 8 and 16 of the waveguides 6 and 14.

When optical fibers are used, the diameter of the light waveguides 6 and 14 may be about 0.15 mm, the thickness of the measuring head, including the optical fibers, may be about 0.3 mm, and the thickness of membrane 22 may be less than 0.3 mm. Thus, the thickness of the entire microphone/sensor will be relatively thin, being less than 0.6 mm.

As shown in Figs. 1*a* and 1*b*, a light beam produced by light source 4 travels along the waveguide 6, and upon reaching the tapered face 10, it is totally reflected back towards the surface of the end portion 8 at an angle of about 60°, as shown by Arrow *A*. Upon exiting the surface of the light waveguide portion 8 and entering a different medium, e.g., air, the light beam is refracted at an angle of about 45° with respect to axis 12, and reaches the membrane 22, where it is reflected towards the light waveguide wedge-shaped portion 16 at the same angle. Upon impinging on and entering portion 16, the light beam is refracted and proceeds inside the waveguide 14 towards the detector 20.

Referring to Fig. 2, it is seen that the tapered or wedge-shaped portions 24, 26 of waveguides 6 and 14, respectively, are not made as integral units. The waveguides 6 and 14 are cut at their ends perpendicular to their axes, and a reflector 28, having two symmetrical reflecting surfaces 30, 32, including an angle of about 120°, is disposed between and connected to the perpendicular ends of waveguides 6 and 14. Transparent material is then filled in between the reflecting surfaces 30, 32, to form the solid wedge-shaped bodies 24, 26. The filled material from which wedge-shaped bodies 24, 26 are cast is of a quality providing good transmission of the light beam from source 4, via membrane 22, to the detector 20, as explained above with reference to Figs. 1*a* and 1*b*.

In Fig. 3, there is illustrated a parallel arrangement of four waveguides of the type described above with reference to Figs. 1*a* and 1*b*, all disposed in a single plane and operable by a single light source 4 and detector 20.

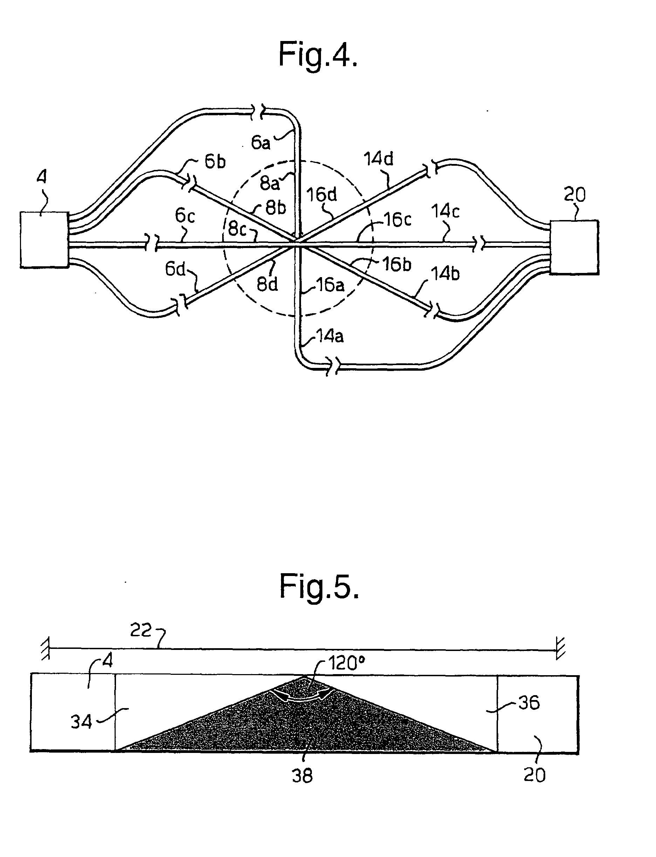

The waveguides leading from light source 4 to detector 20 need not necessarily extend parallel to each other. Fig. 4 illustrates an arrangement in which the waveguides do not extend parallel to each other, but rather, the tapered end portions 8 and 16 of the waveguides are all centrally located within a defined area delimited by the circle *B* (Figs. 1*b* and 4). Obviously, the reflecting surface or membrane 22 is disposed with relation to the encircled area.

A still further embodiment of the present invention is shown in Fig. 5, wherein, similar to the embodiment of Fig. 2, the light source 4 and detector 20 are directly coupled to the wedge-shaped bodies 34 and 36. The space between these two bodies is filled by an opaque material 38. The operation of the embodiment of Fig. 5 is substantially the same as described above with reference to Fig. 2.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A thin optical microphone/sensor for measuring distances to, and/or physical properties of, a reflective surface, comprising:
a light source coupled to a first light waveguide, and
a second light waveguide contiguous with said first light waveguide, coupled to a photodetector;
wherein said first and said second light waveguides are wedge-shaped bodies disposed with their thin edges facing each other to form a contiguous surface along one side of said waveguides and to include an angle of at least 110° at their opposite sides, causing a substantially total internal reflection of the light reaching said opposite sides from within the bodies.

2. The microphone/sensor as claimed in claim 1, wherein said light source is coupled to said first light waveguide via an additional waveguide portion.

3. The microphone/sensor as claimed in claim 1, wherein said photo detector is coupled to the second light waveguide via an additional waveguide portion.

4. The microphone/sensor as claimed in claim 2 or claim 3, wherein said additional light waveguide portions are constituted by a portion of an optical fiber.

5. The microphone/sensor as claimed in claim 1, wherein said wedge-shaped bodies are formed by molding.

6. The microphone/sensor as claimed in claim 1, wherein said opposite sides of said wedge-shaped bodies forming an angle with each other, are light-reflective.

7. The microphone-sensor as claimed in claim 1, wherein the space included between said opposite sides is filled with an opaque material.

8. The microphone/sensor as claimed in claim 1, wherein a plurality of said waveguides are arranged in parallel to each other and are commonly coupled to a single light source and a single photo detector.

9. The microphone/sensor as claimed in claim 1, further comprising a reflective surface disposed in spaced-apart relationship to said first and second waveguides.
